# EUROPEAN PATENT APPLICATION

(11) **EP 4 843 891 A1**
(43) Date of publication of application: **25.11.2026**
(21) Application number: 26180523.8
(22) Date of filing: 22.05.2026
(51) Int. Cl.: B64D 27/40

(54) **AIRCRAFT STRUCTURE**

(30) Priority: 23.05.2025 GB 202508082
(71) Applicant: Airbus Operations Ltd, Filton, Bristol BS34 7PA (GB)
(72) Inventor: EGGELTON, Matthew, Filton, Bristol, BS34 7PA (GB); OGG, Andrew, Filton, Bristol, BS34 7PA (GB); BOLGER, Steve, Filton, Bristol, BS34 7PA (GB); ADAMS, Samuel, Filton, Bristol, BS34 7PA (GB); WATSON, Ross, Filton, Bristol, BS34 7PA (GB); SALISBURY, Ross, Filton, Bristol, BS34 7PA (GB)
(74) Representative: EIP

(57) **Abstract**

Disclosed is a fitting for attachment of a pylon to an aircraft. The fitting comprises an integrally-formed first structure, second structure and third structure. The first structure is configured to be attachable to a first portion of a pylon. The second structure is configured to be attachable to a second portion of the pylon. The first and second structure are configured to support a weight of the pylon. The third structure is configured as a lateral load fitting to transfer lateral loads on the pylon to the fitting. An attachment system and method of assembly are also provided.

## Description

### TECHNICAL FIELD

The present disclosure relates to fittings for attaching pylons to aircraft.

### BACKGROUND

Assembling aircraft is a time-consuming task which requires parts to be aligned and securely fastened with high accuracy. It is desirable to improve aircraft manufacture methods.

### SUMMARY

A first aspect of the present disclosure provides a fitting for attachment of a pylon to an aircraft. The fitting comprises an integrally-formed combination of structures comprising a first structure, a second structure and a third structure. The first structure is configured to be attachable to a first portion of a pylon. The second structure is configured to be attachable to a second portion of the pylon. The first and second structure are configured to support a weight of the pylon. The third structure is configured as a lateral load fitting to transfer lateral loads on the pylon to the fitting.

A single-piece fitting is thereby provided which provides weight-bearing and lateral-load transmitting functionalities. By providing the first, second, and third structures as an integrally-formed, e.g. monolithic device, misalignment between these structures can be avoided or reduced. In this way, the fitting of the first aspect may be attached to the aircraft, such as at the underside of an aircraft wing, and the pylon subsequent attached to the aircraft using the fitting, as part of an assembly method in which realignments can be reduced or minimised compared with separate inboard, outboard and lateral fittings. In particular, post-assembly operations such as line-boring of apertures for fittings, for example, or operations for creating and/or aligning other interfacing portions for which accurate alignment is important can be avoided or reduced, as in a single-piece fitting these interfacing portions (such as the apertures) can remain in alignment throughout assembly. Furthermore, by providing a single-piece fitting having the first, second, and third structures, loads can be distributed more evenly throughout the fitting. The integrated form may further facilitate a reduced spatial footprint compared with discretely formed components, which can reduce aerodynamic drag and improve, for example, underwing airflow with a narrower fairing. A single-piece fitting may be attachable to the aircraft with fewer bolts, for example, further reducing material usage and weight, whilst also improving space for other components and, when attached to the underside of a wing, for example, wing box access. Furthermore, due to the simplified assembly facilitated by the fitting, in which need for realignments of the fitting is reduced or minimised, subcomponents such as systems installation brackets can be pre-assembled prior to installation in knowledge that unwanted repositioning of components is minimised.

A "pylon", as described herein, encompasses a structure for attaching and thereby externally mounting a component such as an engine to a part of the aircraft fuselage or wing. The pylon may be attached to a hardpoint of the aircraft and may provide a mounting point for the engine or some other component to be mounted, retaining said engine or component at a distance from the aircraft.

The first and second structures, in being configured to support a weight of the pylon, means that the first and second structure are the parts of the fitting primarily responsible for weight-bearing and a majority of the weight of the pylon is transferred to the first and second structure compared to other parts of the fitting.

Optionally, the fitting is configured for attachment of a pylon to an underside of an aircraft wing. In other examples, the fitting, in accordance with the present disclosure, may be configured for attachment of a pylon to a part of the fuselage, for example in a tail-mounted pylon and engine arrangement.

In some examples, the fitting is a front fitting, configured to be positioned towards the leading edge of the aircraft wing, and a rear fitting, distanced from the front fitting and positioned towards the trailing edge of the aircraft wing, is additionally provided for attachment of the wing pylon to the aircraft wing. The rear fitting is towards the trailing edge of the aircraft wing relative to the position of the front fitting; the rear fitting itself may be midway between the leading and trailing edge, for example, or closer to the leading edge than to the trailing edge.

Optionally, the fitting is configured such that, when attached to the underside of the aircraft wing, the first structure is inboard of the second structure. In other words, the first structure is positioned at a relatively inboard position, nearer to a root end of the wing, whereas the second structure is positioned at a relatively outboard position, nearer to a tip end of the wing. In this way, the first and second structures are arranged in a spanwise direction along the underside of the wing. This adopts a conventional attachment arrangement for pylons to a wing, in particular to a backwards swept wing, for example, in which the pylon is supported at lateral positions, which can render the fitting useful in retrofitting applications with existing pylon boxes, for example. In other examples, such as forward swept wings or wings with no sweep, this arrangement may be different and the first structure may not be inboard of the second structure.

Optionally, the third structure is provided, in a lateral direction from inboard to outboard, between the first and second structure. The third structure, which is configured as a lateral load fitting, can thereby distribute lateral loads from the pylon in a more uniform manner, as the third structure is located at a relatively central location relative to the attachment points provided by the first and second structure.

Optionally, the first, second, and third structure are arranged substantially colinearly in a lateral direction from inboard to outboard. That is, the first, second, and third structure are arranged to at least partially overlie a common axis which extends in a generally spanwise direction. This can facilitate more effective lateral load transfer into the third structure.

Optionally, the third structure is provided along an axis between the first and second structure. The axis may be parallel to a longitudinal direction of a fuselage of the aircraft, for example. Optionally, the first, second, and third structure are arranged substantially colinearly along this axis. This can facilitate more effective lateral load transfer into the third structure.

Optionally, the third structure is connected to the first and second structure by respective webs. In this way, the third structure can function as both a load transfer component and a structural stiffener for the first and second structures. This can reduce or eliminate the need for additional reinforcements and stiffeners, which means an overall weight of the fitting can be reduced whilst a requisite strength and stiffness is maintained.

Optionally, the webs extend in a lateral direction from inboard to outboard. This further facilitates lateral stiffening of the first and second structure.

Optionally, the webs are arranged substantially colinearly with the first, second and third structure. This can improve a stiffening effect of the webs. Arranging the structures and webs colinearly can reduce a spatial footprint of these components.

Optionally, the fitting comprises one or more integrally-formed structural stiffeners which extend from at least one of the first and second structure. The integrally-formed stiffeners may include the webs between the third structure and the first and second structures. The integrally-formed stiffeners may emanate from the respective first or second structure at respective angles to provide stiffening in various respective directions. In this way, each structure can be associated with one or more integrally-formed structural stiffeners to provide strengthening in directions which need reinforcing. Providing integrally-formed stiffeners extending from a structure can facilitate a lightweight construction relative to, for example, simply making the structure bigger to bring about the increased strength.

Optionally, at least one of the first and second structure comprises a respective integrally-formed lateral structural stiffener extending in a lateral direction, from inboard to outboard, and a respective longitudinal structural stiffener extending in a longitudinal direction. The longitudinal direction may be perpendicular, or generally perpendicular (such as within 5 or 10 degrees), to the lateral direction. In this way, stiffening is provided in each direction of a plane which can improve strength of the fitting against different forces to which it may be subject during operation.

Optionally, the first and second structure are each clevises configured to receive respective pins to thereby attach the pylon to the fitting. A clevis can also be referred to as a clevis fastener, which is a two-piece fastener comprising a clevis and a pin, or clevis pin head.

Optionally, the first and second structure comprise respective apertures which are concentrically aligned with each other about an axis. In other words, the first structure comprises a first aperture and the second structure comprises a second aperture, the first and second aperture concentrically aligned with each other about an axis.

Optionally, the first and second structures are configured to be attached to opposite sides of the pylon. In this way, the weight of the pylon can be more evenly distributed between the first and second structures.

Optionally, the third structure is configured to be connected to the first and second portion of the pylon by respective linking elements. This can improve the effectiveness of the third structure in redistributing lateral loads on the pylon through the fitting.

Optionally, the structure is additively-manufactured. This can facilitate relatively cost-effective production of complex geometries in terms of materials, time, and energy costs associated with manufacture of the fitting.

A second aspect of the present disclosure provides an attachment system comprising the fitting of the first aspect as a front fitting, configured to be positioned towards a leading edge of the aircraft wing, and further comprising a rear fitting, configured to be positioned towards a trailing edge of the wing, the front fitting and rear fitting being configured to attach a pylon to the underside of a wing.

A third aspect of the present disclosure provides an aircraft wing comprising the fitting of the first aspect, or the attachment system of the second aspect, the fitting or attachment system being attached to a wing cover on the underside of the aircraft wing.

Optionally, the pylon is attached to the first and second structure of the fitting and coupled to the third structure of the fitting.

Optionally, the third structure is coupled to the first and second portion of the pylon by respective linking elements. In some examples, shackles link the third structure to the first and second portions of the pylon.

A fourth aspect of the present disclosure provides an aircraft comprising the fitting of the first aspect, the aircraft wing of the second aspect, or the attachment system of the third aspect. The aircraft can be manufactured more quickly due to the improved assembly process afforded to the aircraft wing.

A fifth aspect of the present disclosure provides a method of assembling a portion of an aircraft. The method comprises providing a structure of an aircraft, attaching a fitting according to the first aspect or an attachment system according to the second aspect to the structure, and attaching a pylon to the fitting by attaching the pylon to the first, second, and third structures of the fitting.

The method therefore involves attaching a single-piece fitting to the aircraft structure, whereas assembly methods to date have involved attaching individual fittings across multiple assembly steps. These individual fittings can require realignment and post-assembly line-boring, for example, whereas in performing assembly of a portion of an aircraft by the method according to the present disclosure, such procedures can be reduced or avoided entirely.

Optionally, the structure of the aircraft is the underside of an aircraft wing. In other examples, the structure of the aircraft is a portion of a tail of the aircraft.

Optionally, the pylon may be attached to the underside of the aircraft wing by the fitting, which is a front fitting, and a rear fitting.

Optionally, the method comprises additively manufacturing the fitting. This can provide a straightforward method of forming a single-piece fitting which is monolithic, for example.

Optional features of any one of the aspects of the present invention may be applied equally to any other one of the aspects of the present invention, where appropriate.

### BRIEF DESCRIPTION OF THE DRAWINGS

Embodiments of the invention will now be described, by way of example only, with reference to the accompanying drawings, in which:
Figure 1 shows a perspective view of a fitting according to an example.
Figure 2 shows a schematic illustrating a fitting attaching a pylon to the underside of an aircraft wing, according to an example.
Figure 3 shows, schematically, an assembly process of a pylon being attached to the underside of an aircraft wing by a fitting, according to an example.
Figure 4 shows a pylon attached to the underside of a wing by a fitting, according to an example.
Figure 5 illustrates a fitting being attached to the underside of a wing, according to an example.
Figure 6 is a flowchart illustrating steps of an assembly method, according to an example.

### DETAILED DESCRIPTION

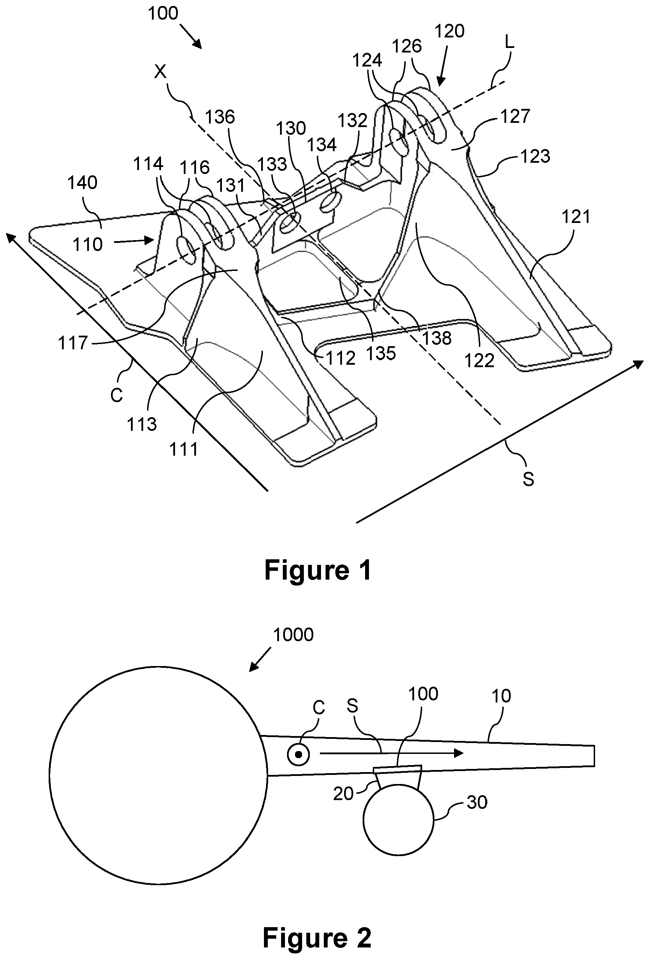

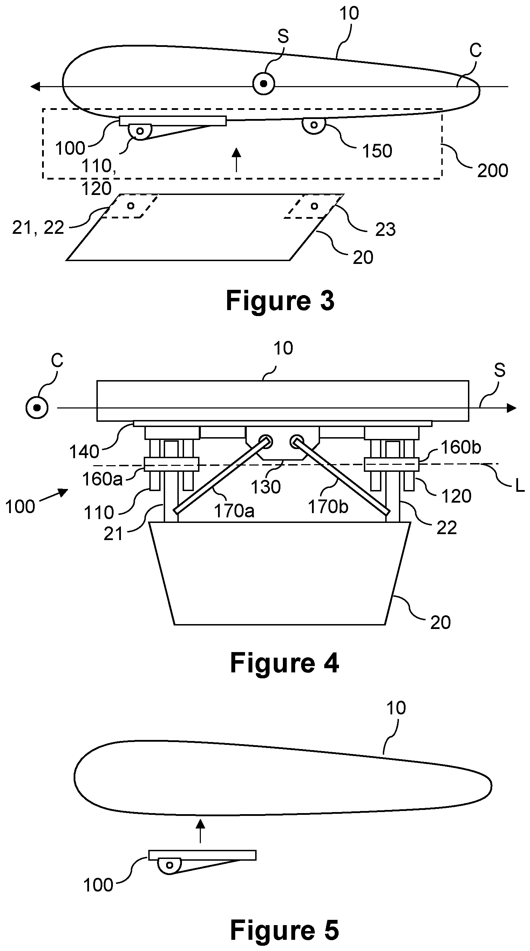

A fitting 100 is illustrated in Figure 1. The fitting 100 is for attaching a pylon, which in this example is a wing pylon 20, to an aircraft 1000, and in particular in this example to the underside of a wing 10 of the aircraft 1000, illustrated schematically in Figure 2. In particular, in this example the fitting 100 is part of an attachment system 200, depicted in further detail in Figure 3, which includes the fitting 100 as a front fitting and also includes a rear fitting 150. An engine 30 is supported by the wing pylon 20.

The fitting 100 will be described in reference to a chordwise direction, illustrated by indicative arrow C, and a spanwise direction, illustrated by indicative arrow S. The chordwise direction C extends between trailing and leading edge of the wing 10 in a direction generally parallel to a centreline of a fuselage of the aircraft 1000. The chordwise direction C may be referred to herein as a "longitudinal" direction. The spanwise direction S extends between a root of the wing (proximal to the fuselage) and a tip of the wing (distal to the fuselage) and is generally perpendicular to a centreline of the fuselage of the aircraft 1000. The spanwise direction S may be referred to herein as a "lateral" direction. Where reference to trailing edge, leading edge, root end and tip end of the wing is made herein, it will be understood that this refers to the fitting 100 in an installed configuration, installed upon the underside of the wing 10. It will be readily appreciated how these directions and orientations map to the fitting 100 taken in isolation from the wing 10.

The fitting 100 is a single-piece fitting comprising an inboard clevis 110, an outboard clevis 120 and a lateral load fitting 130 all being integrally formed on a common base plate 140. In other words, the fitting 100 is a substantially monolithic structure, barring components such as clevis pins which interface with the fitting 100.

The inboard clevis 110 and outboard clevis 120 are examples of a first and second structure of the fitting 100, respectively. Each of the inboard and outboard clevises 110, 120 are for attachment to a respective portion of the wing pylon 20 and the inboard and outboard clevises 110, 120 are primarily for supporting a weight of the wing pylon 20. The inboard and outboard clevises 110, 120 are respectively disposed generally symmetrically from a central axis X of the base plate 140, the central axis X extending in the chordwise direction C and approximately bisecting the fitting 100.

The inboard clevis 110 is positioned, when the fitting 10 is installed into the underside of the wing 10, towards the root end of the wing 10. The inboard clevis 110 comprises two parallel lugs 116. The lugs 116 of the inboard clevis 110 protrude from, and are integrally formed with, the base plate 140. The lugs 116 are formed of webs having surfaces predominantly oriented laterally. Each lug 116 comprises a respective aperture 114 which are aligned concentrically about an axis L, the axis L extending in a spanwise direction. That is, a centroid of each aperture 114, as taken in a plane perpendicular to the axis L, are colinear along the axis L. The apertures 114 are for receiving a clevis pin which attaches the wing pylon 20 to the fitting 100, depicted by and described in more detail in view of Figure 4.

The two lugs 116 are partially conjoined by an intermediate section 117, which connects rearmost portions of the two lugs 116, the rearmost portions of the lugs 116 being portions of the lugs 116 positioned nearest the trailing edge of the wing 10 when the fitting 100 is installed to the underside of the wing 10.

Several structural stiffeners, in the form of ribs, emanate from the inboard clevis 110 in respectively different directions across the base plate 140 to provide stiffening of the inboard clevis 110 in different directions. A first lateral stiffener 113 of the inboard clevis 110 extends towards a root end of the wing 10 from a first of the lugs 116 of the inboard clevis 110. A second lateral stiffener 112 extends towards a tip end of the wing 10 from a second of the lugs 116 of the inboard clevis 110. A longitudinal stiffener 111 extends from the intermediate section 117, thereby being coupled to both lugs 116, towards the trailing edge of the wing 10. Each structural stiffener 111, 112, 113 has a respective tapering height, wherein a height of the structural stiffener 111, 112, 113 refers to a distance from the base plate 140. For each structural stiffener 111, 112, 113, the respective height tapers from a maximum height at a position proximal to the lugs 116 to a minimum height at a position distal to the lugs 116.

The outboard clevis 120 has a generally similar form to the inboard clevis 110, and the above description of the inboard clevis 110 applies equally to the outboard clevis 120, where appropriate. The outboard clevis 120 is positioned, when the fitting 10 is installed onto the underside of the wing 10, towards the tip end of the wing 10. The outboard clevis 120 comprises parallel lugs 126 with respective aperture 124. The apertures 125 of the lugs 126 of the outboard clevis 120 are aligned concentrically with the apertures 114 of the lugs 116 of the inboard clevis 110, all apertures of the inboard and outboard clevises 110, 120 being concentrically aligned along the axis L. Rearmost portions of the lugs 116 of the outboard clevis 120 are conjoined by a respective intermediate section 127. Several structural stiffeners emanate from the outboard clevis: a first lateral stiffener 123 of the outboard clevis 120 extends towards a tip end of the wing 10 from a first of the lugs 126 of the outboard clevis 120, a second lateral stiffener 122 of the outboard clevis 120 extends towards a root end of the wing 10 from a second of the lugs 126 of the outboard clevis 120. A longitudinal stiffener 121 of the outboard clevis 120 extends from the intermediate section of the outboard clevis 120 towards a trailing edge of the wing 10. The longitudinal stiffeners 111, 121 of the inboard and outboard clevises run generally parallel to one another, albeit slightly angled with respect to one another to conform to the shape of the wing pylon 20.

The lateral load fitting 130 is an example of a third structure of the fitting 100 which is configured to transfer lateral loads on the wing pylon to the fitting 100. The lateral load fitting 130 is disposed between the inboard clevis 110 and the outboard clevis 120 . The inboard clevis 110, lateral load fitting 130 and outboard clevis 120 are arranged generally colinearly along the axis L, generally equidistant between the inboard clevis 110 and the outboard clevis 120. The lateral load fitting 130 is positioned generally on the central axis X of the fitting 100.

The lateral load fitting 130 comprises a web extending laterally and having external surfaces facing in chordwise directions, towards the leading and trailing edge of the wing 10, respectively. A first aperture 133 and second aperture 134 are disposed in the web, generally symmetrically about the central axis X. The first aperture 133 and second aperture 134 are for receiving linking elements, such as shackles, which connect the lateral load fitting 130 to the wing pylon. In this example, the apertures 133, 134 of the lateral load fitting 130 are oriented generally perpendicular to the apertures 114, 124 of the first and second clevises 110, 120.

The lateral load fitting 130 is joined to the inboard clevis 110 by a first intermediate web 131 and joined to the outboard clevis 120 by a second intermediate web 132. In this example, the first and second intermediate web 131, 132 are colinear with the lateral load fitting 130 and can be considered to form a single web which extends generally along the axis L; in other examples, the intermediate webs may form more distinct portions. The intermediate webs 131, 132 serve to transfer loads between the clevises 110, 120 and the lateral load fitting 130, as well as stiffen the inboard and outboard clevises 110, 120.

A first longitudinal stiffener 136 extends from the web of the lateral load fitting 130 towards the leading edge of the wing 10. A second longitudinal stiffener 135 extends from the web of the lateral load fitting 130 towards a trailing edge of the wing 10. The longitudinal stiffeners 135, 136 of the lateral load fitting 130 serve to increase stiffness of the lateral load fitting 130 in the longitudinal direction. The second longitudinal stiffener 135 adjoins each of the second lateral stiffener 112 of the first clevis 110 and the second lateral stiffener 122 of the second clevis 120 at a meeting point 138. This can further enhance the degree to which loads are transferred through the fitting 100.

The base plate 140 is substantially planar and each of the inboard and outboard clevises 120, 130, lateral load fitting 130, and the various structural stiffeners are formed integrally on the base plate 140. In a sense, the base plate 140 can be considered a common, extended flange which projects from respective bases of the aforementioned clevises 120, 130, lateral load fitting 130 and structural stiffeners. Fillets are provided at the bases of each component (clevises, stiffeners) of the fitting 100 where the component transitions into the base plate 140. In use, the surface area of the base plate 140 is generally parallel to a surface area of the underside of the wing 10. Fasteners can be applied to the base plate 140 to attach the fitting 100 to the underside of the wing 10. The base plate 140 may comprise receptacles for said fasteners such as a through hole, which may be threaded, for example. In some cases, blind fasteners may be used and the base plate 140 may comprise pilot holes for their placement.

The fitting 100 comprises an integrally-formed combination of structures, in this example the inboard clevis 110, outboard clevis 120 and the lateral load fitting 130, as well as, in this example, several structural stiffeners which extend from and between the clevises 120, 130 and lateral load fitting 130. These structures are therefore all formed from a continuous piece of material to form a single, unified piece, rather than being assembled from separate parts requiring subsequent joining processes, for example. This can prevent misalignments which might occur during assembly of such separate parts into the fitting, as well as provide improved strength of the fitting, for example. Handling of the fitting 100 is simplified, since it is a single piece, compared with manoeuvring each of the structures individually. It will be appreciated that the fitting 100 being integrally-formed does not rule out the possibility for further elements to be connected to the fitting. For example, interfacing the fitting 100 with the wing pylon may utilise fastening components such as pins, bolts, or screws which are distinct pieces from the fitting 100.

The fitting 100 is formed of a material of suitable strength to support the wing pylon 20 and engine 30. Manufacturing techniques such as investment or die casting, CNC machining, or additive manufacturing may be used to form the fitting 100. The use of additive manufacturing can facilitate quicker and/or less expensive manufacture whilst facilitating an integrally-formed fitting with relatively complex geometries to be formed. The fitting 100 may be formed of ferrous or non-ferrous metals, for example, or composite materials, for example.

Figure 3 and 4 depict how the fitting 100, which is a front fitting of the attachment system 200, interfaces with the wing pylon 20. The wing pylon 20 comprises two interfacing portions 21, 22 which are portions of opposite lateral walls of the wing pylon 20. During attachment of the wing pylon 20 to the underside of the aircraft wing 10, are received within the inboard and outboard clevises 110, 120 respectively, being received between the respective lugs 116, 126. Each interfacing portion 21, 22 comprises a respective aperture which, in the assembled configuration, is arranged concentrically with the apertures 114, 124 of the lugs of the inboard and outboard clevises 110, 120, respectively, along the axis L. An inboard interfacing portion 21 of the wing pylon 20 is received between the lugs 116 of the inboard clevis 110, and an outboard interfacing portion 22 of the wing pylon 20 is received between the lugs 126 of the outboard clevis 120. An inboard clevis pin 160a is provided through the apertures 114 of the inboard clevis 110 and the aperture of the inboard interfacing portion 21. An outboard clevis pin 160b is provided through the apertures 126 of the outboard clevis pin 120 and the aperture of the outboard interfacing portion 22. This thereby attaches the wing pylon 20 to the fitting 100.

The lateral load fitting 130 of the fitting 100 is attached to the inboard interfacing portion 21 by an inboard shackle 170a, which is an example of a linking element. The lateral load fitting 130 of the fitting 100 is attached to the outboard interfacing portion 22 by an outboard shackle 170b. These shackles 170a, 170b are attached to the lateral load fitting 130 at the first and second apertures 133, 134, respectively, and to the interfacing portions 21, 22 at respective fixing points below the clevis pins 160a, 160b. Lateral loads on the wing pylon 20 are transmitted through the shackles 170a, 170b to the lateral load fitting 130.

At a rear position of the wing pylon 20, a rear interfacing portion 23 of the wing pylon 20 interfaces with the rear fitting 150 of the attachment system 200. The rear fitting 150 aids the front fitting 100 in supporting the weight of the wing pylon 20. The rear interfacing portion 23 may be, for example, a strut which spans from the wing pylon 20 to the rear fitting 150 and which is attached to the rear fitting 150 by a similar pin system to the front fitting.

Other attachment points may be provided, not illustrated here, to support the wing pylon 20. For example, a further strut may be provided which spans from the wing pylon 20 to a rib of the wing 10. The skilled person will appreciate that different wings and different wing pylon designs have different attachment architectures and the fitting described herein is not limited to a particular arrangement, and the fitting described herein can be adapted for use with different attachment architectures.

Figure 5 illustrates attachment of the fitting 100 to the underside of the aircraft wing 10, in the same view orientation as Figure 3. The fitting 100 can be aligned on the underside of the wing 10 and then be attached by appropriate fastening means, such as by bolts, screws, rivets, or the like.

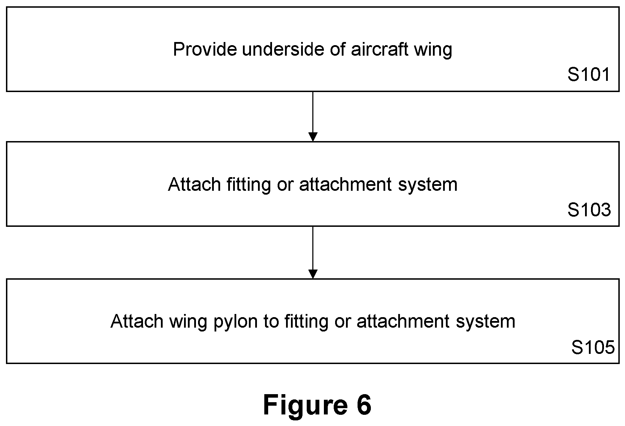

Figure 6 is a flowchart depicting steps S101, S103, S107 performed as path of a method of assembling a portion of an aircraft wing.

At Step S101, the underside of an aircraft wing is provided. This may be during a manufacturing process of the aircraft wing, for example, or maybe in a retrofit application on an existing way, for example. The underside of the aircraft wing may be just a portion of the overall aircraft wing in a fully-assembled form, for example.

At Step S103, a fitting according to the present disclosure is attached to the underside of the wing. As elaborated on later, in some cases just a single fitting may be used to attach the wing pylon to the underside of the wing. In the example depicted by Figure 3, a rear fitting is also attached, and so Step S103 covers attaching an attachment system to the underside of the wing, the attachment system comprising a single-piece fitting as described herein. For example, the fitting 100 depicted in Figure 1 is attached to the underside of the wing, as depicted in Figure 5, and the rear attachment 150 is also attached to the underside of the wing at Step S103. Advantageously, compared with existing methods, in which several more attachment structures (such as the inboard and outboard clevises of the fitting 100) must be attached individually, the single-piece fitting provided by e.g. the fitting 100 allows each of these to be attached to the underside of the wing concurrently, avoiding or reducing errors between their relative alignments or their alignment relative to the rest of the wing. It will be appreciated that even where the attachment system comprises multiple components, the provision of a single-piece fitting which combines multiple attachment structures can reduce an overall number of manufacture steps due to the potential for reduction in misalignment correction and the like. This can save processing steps and manufacturing time, for example.

At Step S105, the wing pylon is attached to the fitting or attachment system, depending on what has been provided at Step S103, to thereby secure the wing pylon to the underside of the aircraft wing.

The above embodiments are to be understood as illustrative examples of the invention. Further embodiments of the invention are envisaged.

For example, in the example of Figure 1, the first and second structure of the fitting are clevises which receive clevis pins to attach the wing pylon to the fitting. This can be a robust but straightforward attachment method. In other examples, other attachment mechanisms may be used and the first structure and second structure should be recognised to generally represent structures through which the fitting can support weight of the pylon (or a share thereof, as the weight may be distributed through other fittings of an attachment system).

For example, in the example of Figure 1, the third structure is a lateral load fitting which, as illustrated in Figure 4, is attached to the first and second portion of the wing pylon by shackles. In other examples, other linking elements may be used, and said linking elements may be coupled to other portions of the wing pylon. In some examples, the third structure may abut portions of the wing pylon rather than comprise distinct linking elements which couple the wing pylon to the third structure of the fitting.

The example depicted in Figure 1 is an exemplary arrangement of first, second, and third structures which are arranged substantially colinearly. In other examples of the fitting, the first, second, and third structure may have a different arrangement.

For example, the fitting in Figure 1 is used as a front fitting in conjunction with a rear fitting as part of an attachment system. A fitting according to the present disclosure may be designed to be used as a sole fitting. For example, the relative scale of the wing pylon (or e.g. the engine attached thereto) may be sufficiently small that a single-piece fitting comprising first and second structures for weight-bearing, and a third structure for lateral load transfer is suitable as an attachment, without requiring a separate rear fitting. Or, the rear fitting may be integrally formed as a fourth structure, located rearwards of the first and second structures, for example.

For example, the first and second structures here are configured to attach to lateral walls of the wing pylon box. In other examples, the first and second structures may attach to different parts of the wing pylon. For instance, the first structure may attach to a front wall of the wing pylon, and the second structure may attach to a middle portion of the wing pylon, for example. The skilled person will appreciate that the fitting according to the present disclosure can be modified in size, scale, shape, and general design according to the geometry of the underside of the wing and the geometry of the wing pylon, for example.

For example, the arrangement of webs and ribs as structural stiffeners depicted in Figure 1 has been identified by the inventors as a particular advantageous arrangement which provides the requisite strength to carry the wing pylon, whilst remaining relatively compact and lightweight. It will be appreciated that in other examples, however, different arrangements of such structural stiffeners may be provided whilst facilitating similar benefits.

For example, the exemplary fitting of Figure 1 is for attachment of a pylon to the underside of an aircraft wing. In other examples, the fitting may be configured to attach a pylon to another part of an aircraft. For instance, in some examples, an aircraft comprises an engine attached to a tail of the aircraft by a pylon, and a fitting in accordance with the present disclosure is configured to attach the pylon to the tail portion of the aircraft by including an integrally-formed combination of first, second, and third structures.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. It is to be noted that the term "or" as used herein is to be interpreted to mean "and/or", unless expressly stated otherwise.

## Claims

1. A fitting for attachment of a pylon to an aircraft, the fitting comprising an integrally-formed combination of structures comprising a first structure, a second structure and a third structure, wherein:
the first structure is configured to be attachable to a first portion of a pylon,
the second structure is configured to be attachable to a second portion of the pylon,
the first and second structure are configured to support a weight of the pylon, and
the third structure is configured as a lateral load fitting to transfer lateral loads on the pylon to the fitting.

2. The fitting according to claim 1, wherein the fitting is configured for attachment of a pylon to an underside of an aircraft wing; optionally wherein, when attached to the underside of the aircraft wing, the first structure is inboard of the second structure.

3. The fitting according to claim 2, wherein the third structure is provided, in a lateral direction from inboard to outboard, between the first and second structure.

4. The fitting according to any one of the preceding claims, wherein the first, second, and third structure are arranged substantially colinearly in a lateral direction from inboard to outboard.

5. The fitting according to any one of the preceding claims, wherein the third structure is connected to the first and second structure by respective webs; optionally wherein the fitting is configured for attachment of a pylon to an underside of an aircraft wing and the webs extend in a lateral direction from inboard to outboard.

6. The fitting according to claim 5, wherein the webs are arranged substantially colinearly with the first, second and third structure.

7. The fitting according to any one of the preceding claims, wherein the fitting comprises one or more integrally-formed structural stiffeners which extend from at least one of the first and second structure;
optionally wherein the fitting is configured for attachment of a pylon to an underside of an aircraft wing and at least one of the first and second structure comprises a respective integrally-formed lateral structural stiffener extending in a lateral direction, from inboard to outboard, and a respective longitudinal structural stiffener extending in a longitudinal direction.

8. The fitting according to any one of the preceding claims, wherein the first and second structure are each clevises configured to receive respective pins to thereby attach the pylon to the fitting; optionally wherein the first and second structure comprise respective apertures which are concentrically aligned with each other about an axis.

9. The fitting according to any one of the preceding claims, wherein the first and second structures are configured to be attached to opposite sides of the pylon; and/or wherein the third structure is configured to be connected to the first and second portion of the pylon by respective linking elements.

10. An attachment system comprising the fitting of any one of claims 2 to 9 as a front fitting, configured to be positioned towards a leading edge of the aircraft wing, and further comprising a rear fitting, configured to be positioned towards a trailing edge of the wing, the front fitting and rear fitting being configured to attach a pylon to the underside of a wing.

11. An aircraft wing comprising the fitting of any one of claims 2 to 14, or the attachment system of claim 15, wherein the fitting or attachment system is attached to a wing cover on the underside of the aircraft wing.

12. The aircraft wing of claim 11, further comprising the pylon attached to the first and second structure of the fitting and coupled to the third structure of the fitting;
optionally wherein the third structure is coupled to the first and second portion of the pylon by respective linking elements

13. An aircraft comprising the fitting of any one of claims 1 to 9, the attachment system of claim 10, or the aircraft wing of claim 11 or 12.

14. A method of assembling a portion of an aircraft, the method comprising:
providing a structure of an aircraft,
attaching a fitting according to any one of claims 1 to 9, or an attachment system according to claim 10, to the structure of the aircraft, and
attaching a pylon to the fitting by attaching the pylon to the first, second, and third structures of the fitting or to the attachment system.

15. The method of claim 14, further comprising additively manufacturing the fitting; and/or wherein the structure of the aircraft is the underside of an aircraft wing.
